# EUROPÄISCHE PATENTSCHRIFT

(11) **EP 1 894 610 B1**
(45) Veröffentlichungstag und Bekanntmachung des Hinweises auf die Patenterteilung: **03.11.2010**
(21) Anmeldenummer: 07114220.2
(22) Anmeldetag: 13.08.2007
(51) Int. Cl.: B01D 46/10, B01D 46/52

(54) **Flexibles Filterelement**
Flexible filter element
Elément de filtre flexible

(30) Priorität: 22.08.2006 DE 102006039247
(43) Veröffentlichungstag der Anmeldung: 05.03.2008
(73) Patentinhaber: MANN+HUMMEL GmbH, 71638 Ludwigsburg (DE)
(72) Erfinder: Trautmann, Dr. Pius, 70499 Stuttgart (DE); Durst, Dr. Michael, 74586, Frankenhardt (DE)

(56) Entgegenhaltungen:
- EP-A- 1 275 428
- DE-A1- 10 055 732
- DE-B3- 10 350 119

## Beschreibung

### Gebiet der Erfindung

Die vorliegende Erfindung bezieht sich auf ein Filterelement, insbesondere auf ein flexibles Filterelement zur Filterung von Luft für den Innenraum eines Kraftfahrzeugs. Des weiteren bezieht sich die vorliegende Erfindung auf ein Filtermodul.

### Hintergrund der Erfindung, Stand der Technik

Ein solches Filterelement dient der Filterung von Fluidströmungen oder gasförmigen Medien, beispielsweise zur Filterung einer Luftströmung, die dem Fahrzeuginnenraum eines Kraftfahrzeugs zugeführt wird. Obwohl auf beliebige Filterelemente anwendbar, werden die vorliegende Erfindung sowie die ihr zugrunde liegende Problematik nachfolgend mit Bezug auf ein Filterelement zur Filterung von Luft für den Innenraum eines Kraftfahrzeugs beschrieben. Solche Filter werden nachfolgend auch kurz als Kfz-Innenraumluftfilter bezeichnet.

Die zunehmende Luftverunreinigung, insbesondere in Großstädten, in Verbindung mit dem Einsatz moderner Klimaanlagen macht es wünschenswert und auch erforderlich, die von außen in den Innenraum eines Kraftfahrzeuges geleitete und aufbereitete bzw. klimatisierte Luft mittels geeigneter Filter zu filtern. Hierfür kommen beispielsweise Partikelfilter oder Geruchsfilter oder alternativ auch kombinierte Partikel- und Geruchsfilter in Betracht, die in der Luft enthaltene Partikel und inhärente Gerüche aus der Umgebungsluft möglichst gut herausfiltern sollen. Solche Filter zur Filterung von Luft für den Innenraum eines Kraftfahrzeuges sind in einer Vielzahl von Ausführungsformen und Varianten allgemein bekannt, so dass auf deren Aufbau und Funktionsweise nachfolgend nur kurz eingegangen wird.

Da die Wirksamkeit von Filtern insbesondere von der Größe der von der Luft durchströmten Oberfläche des Filters abhängig ist, kommen für Kfz-Innenraumluftfilter überwiegend zickzackförmig gefaltete Filtermedien, häufig auch als plissierte Filtermedien bezeichnet, zum Einsatz. Durch die Faltung des verwendeten Filtermediums kann auf diese Weise abhängig von der Faltungshöhe und dem Faltungsabstand der verschiedenen Faltabschnitte des Filtermediums eine effektive Vergrößerung der von dem Luftstrom durchströmten Filterfläche ermöglicht werden. Um solche Filterelemente mit zickzackförmig gefalteten Filtermedien insbesondere montagetechnisch besser handhaben zu können, sind Armierungselemente (Seitenbänder) vorgesehen. Diese Armierungselemente dienen der seitlichen Fixierung und Stabilisierung des zickzackförmigen Filtermediums und sind mittels eines geeigneten Klebers an den seitlichen Kanten des zickzackförmigen Filtermediums angebracht und in Längsrichtung des Filtermediums verlaufend ausgerichtet. Das Filterelement mit an den gefalteten Längsseiten streifenförmig angebrachten Armierungen kann auf diese Weise montagetechnisch einfach in ein Gehäuse eines Filtermoduls oder einer entsprechenden Ausformung, beispielsweise in die Innenverkleidung eines Kraftfahrzeuges, eingefügt werden. Solche Filterelemente sind z.B. in den Deutschen Patentanmeldungen DE 10 2004 031 609 A1 und DE 103 21 068 A1 sowie dem Deutschen Patent DE 195 45 046 C2 beschrieben.

Fig. 1 zeigt ein solches Filterelement mit Seitenbändern nach dem Stand der Technik. Der Schrift EP 1 275 428 A1 betrifft einen flexiblen Filter der einen plissierten Filterpack aufweist, an dessen gefalteten Längsseiten streifenförmige Rahmenelemente mittels eines Klebers fixiert sind. Die DE 103 50 119 B3 beschreibt ein flexibles Filterelement, wobei dessen Flexibilität durch den Grad des Aufschäumens eines Klebers mit einem Gas erreicht wird. In der DE 100 55 732 A1 wird ein flexibler Filter mit einem Randelement beschrieben, das aus mehreren Baueinheiten zusammengesetzt ist. Die Fixierung des Randelements kann dabei über eine Klebeverbindung ausgebildet sein.

Werden solche Filterelemente als Kfz-Innenraumluftfilter verwendet, dann besteht der zusätzliche Bedarf, dass diese unter montagetechnisch schwierigen Verhältnissen in eigens dafür vorgesehene Ausnehmungen im Innenraum des Kraftfahrzeuges ohne allzu großen Aufwand eingebaut werden. Dies macht es erforderlich, dass diese Filterelemente flexibel sind, da sie teilweise in bogenförmige Aufnahmen oder Gehäuseteilen eingelegt werden müssen. Dies macht es ferner erforderlich, dass die Seitenbänder der Filterelemente einerseits in einer Richtung (Querrichtung) druck- und zugflexibel ausgebildet sind, um passend und dichtend in die entsprechend geformte Aufnahme eingelegt werden zu können, und andererseits in der jeweils anderen Richtung (Längsrichtung) möglichst steif ausgebildet sind.

Die Flexibilität von Filterelementen wird im Wesentlichen durch die Flexibilität des verwendeten Klebstoffs bestimmt. Sobald das Seitenband unabhängig von einem HZK-Dehnungsverhältnis eine ausreichende Flexibilität aufweist, werden die Flexibilität und die Stauchbarkeit des Elements durch die Art des Auftrags und den Kleber selbst bestimmt.

Ein weiterer Bedarf besteht natürlich auch darin, dass diese Filterelemente neben der einfachen montagetechnischen Handhabbarkeit möglichst auch kostengünstig sein sollten und damit insbesondere auch herstellungstechnisch möglichst einfach zu produzieren sind.

### Zusammenfassung der Erfindung

Es ist daher die Aufgabe der vorliegenden Erfindung, ein besseres und insbesondere auch ein flexibleres und dennoch stabiles Filterelement bereitzustellen.

Es ist eine weitere Aufgabe der vorliegenden Erfindung, hierzu ein möglichst einfach herstellbares Filterelement bereitzustellen.

Diese und weitere Aufgaben werden durch das Filterelement nach Anspruch 1 und das Filtermodul nach Anspruch 8 gelöst.

Weitere vorteilhafte Ausgestaltungen sind in den Unteransprüchen enthalten.

### Kurze Beschreibung der Zeichnungen

Die Erfindung wird im Folgenden anhand der Zeichnungen näher erläutert. Dabei zeigt
- Fig. 1: ein Filterelement mit Seitenbändern gemäß dem Stand der Technik;
- Fig. 2: ein erfindungsgemäßes Filtermodul mit einem in ein Filtergehäuse eingefügten erfindungsgemäßen Filterelement; und

### Detaillierte Beschreibung der Ausführunasbeispiele

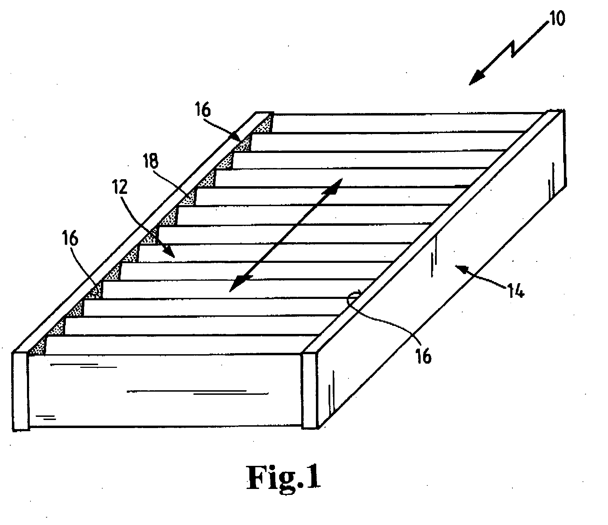

Fig. 1 zeigt ein Filterelement 10 mit Seitenbändern 14 gemäß dem Stand der Technik, wobei angenommen sei, dass das Filterelement 10 hier als Luftfilter und insbesondere als Kfz-Innenraumluftfilter ausgebildet ist. Das Filterelement 10 ist als flexibles Filterelement ausgebildet und weist zu diesem Zweck einen als Filtermedium fungierenden Filtereinsatz 12 auf, der zickzackförmig ausgebildet ist. Der zickzackförmige Filtereinsatz 12 ist in dem Filterelement 10 mittels streifenförmiger Seitenbänder 14 fixiert. Im Beispiel der Fig. 1 sind zwei streifenförmige Seitenbänder 14 vorgesehen, die an seitliche Kanten 16 des Filtereinsatzes anschließen und somit den Filtereinsatz 12 gewissermaßen sandwichartig zwischen den Seitenbändern 14 einschließen. Für die Fixierung des Filtereinsatzes 12 weisen die Seitenbänder 14 eine Klebeschicht 18 auf der Seite des Filtereinsatzes 12 auf. Diese Seitenbänder dienen der Armierung des Filtereinsatzes 12.

Erfindungsgemäß wird nunmehr vorgeschlagen, zur Herstellung eines Filterelements, insbesondere eines Filterelements zur Filterung einer Luftströmung, die dem Fahrzeuginnenraum eines Kraftfahrzeugs zugeführt wird, einen Kleber mit flexiblen Eigenschaften zu verwenden. Die Flexibilität kann damit durch die Eigenschaften des Klebers eingestellt werden, das Seitenband dient somit lediglich als Träger für den Kleber und als Dichtungselement.

Das Seitenband besteht vorzugsweise aus synthetischem Vliesmaterial, Elastomer, flexiblem Kunststoff, verwobenen Vliesmaterialien und dgl. Die Dicke des Seitenbandes beträgt ca. 0,5 bis 15 mm, vorzugsweise 2 bis 6 mm. Die Breite des Seitenbandes, die der Höhe des Filterelements entspricht, beträgt ca. 5 bis 80 mm, vorzugsweise ca. 10 bis 60 mm.

Geeignete Kleber müssen eine ausreichende Dehnbarkeit aufweisen (der Kleber darf natürlich nicht brechen). Des weiteren muss der Kleber die Eigenschaft aufweisen, dass er nach Belastung wieder elastisch in den Ausgangszustand zurückkehrt, ohne sich nennenswert plastisch zu verformen.

Dazu sind Kleber geeignet, die folgende Eigenschaften erfüllen. Sie weisen a) eine Shore-A-Härte nach DIN 53505 < 65 bei 23°C auf und besitzen b) eine Reißdehnung nach ISO 527-3 von > 300%, vorzugsweise von > 400% auf.

Ein Beispiel für einen solchen Kleber ist Q 4208 Paramelt Plastoflex von Henkel. Weitere Beispiele sind für den Fachmann problemlos aufzufinden.

Die Klebeschicht besitzt im Allgemeinen eine Stärke von ca. 0,1 bis 3,0 mm, vorzugsweise von ca. 0,5 bis 1,5 mm.

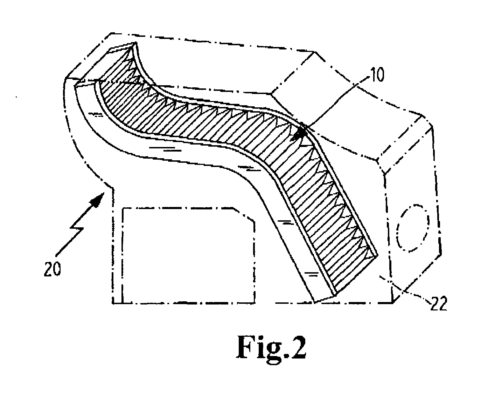

Fig. 2 zeigt ein erfindungsgemäßes Filtermodul 20 mit einem Filtergehäuse 22, in das ein erfindungsgemäßes Filterelement 10 dichtend eingefügt ist.

In einer Ausgestaltung des erfindungsgemäßen Filtermoduls weist das Filtergehäuse 22 des Filtermoduls 20 mit dem zumindest einen erfindungsgemäßen Filterelement 10 einen runden oder einen ovalen Querschnitt auf

Die vorliegende Erfindung ist auf vielfältige Art und Weise modifizierbar. Insbesondere ist die Erfindung auch nicht nur auf Filter zur Filterung von gasförmigen Medien beschränkt, sondern lässt sich sehr vorteilhaft auch für Filter zur Filterung von Flüssigkeiten einsetzen. Auch ist die Erfindung nicht notwendigerweise auf Filter für den Kraftfahrzeugbereich beschränkt, sondern lässt sich bei beliebigen Anwendungen ebenfalls vorteilhaft einsetzen.

## Patentansprüche

1. Flexibles Filterelement (10), insbesondere Filterelement zur Filterung von Luft für den Innenraum eines Kraftfahrzeugs, mit einem als Filtermedium fungierenden flexiblen Filtereinsatz (12), mit mindestens einem in seiner Querrichtung flexiblen Seitenband (14), welches dichtend und zumindest teilweise rahmenförmig um seitliche Ränder des Filtereinsatzes (12) angeordnet ist, wobei das Seitenband (14) zur dichtenden Verbindung mit dem Filtereinsatz (12) auf der Seite des Filtereinsatzes eine Kleberschicht (18) aufweist, **dadurch gekennzeichnet, dass** die Kleberschicht aus einem Kleber besteht, der
a) eine Shore-A-Härte < 65 bei 23°C aufweist und
b) eine Reißdehnung von > 300% besitzt.

2. Filterelement nach Anspruch 1, **dadurch gekennzeichnet, dass** die Reißdehnung > 400% beträgt.

3. Filterelement nach Anspruch 1 oder 2, **dadurch gekennzeichnet, dass** das Material des mindest einen Seitenbandes ausgewählt ist aus synthetischem Vliesmaterial, Elastomer, flexiblem Kunststoff, verwobenen Vliesmaterialien und dgl.

4. Filterelement nach einem der Ansprüche 1 bis 3, **dadurch gekennzeichnet, dass** die Dicke des Seitenbandes ca. 0,5 bis 15 mm, vorzugsweise ca. 2 bis 6 mm beträgt.

5. Filterelement nach einem der vorstehenden Ansprüche, **dadurch gekennzeichnet, dass** die Breite des Seitenbandes ca. 5 bis 80 mm, vorzugsweise ca. 10 bis 60 mm beträgt.

6. Filterelement nach einem dervorstehenden Ansprüche, **dadurch gekennzeichnet, dass** der Filtereinsatz (12) entlang seiner Längsrichtung ziehharmonikaförmig oder zickzackförmig gefaltet oder wellenförmig ausgebildet ist.

7. Filterelement nach einem dervorstehenden Ansprüche, **dadurch gekennzeichnet, dass** das Seitenband (14) zumindest an gefalteten seitlichen Kanten des Filtereinsatzes (12) mittels der Kleberschicht an dem Filtereinsatz (12) befestigt ist.

8. Filtermodul (20), insbesondere Partikel- und/oder Geruchsfilter, mit einem Filtergehäuse (22) mit zumindest einem Filterelement (10) nach wenigstens einem der Ansprüche 1 bis 7, welches in das Filtergehäuse (22) dichtend eingefügt ist.

9. Filtermodul nach Anspruch 8, **dadurch gekennzeichnet, dass** das Filterelement (10) als Geruchs- und/oder als Partikelfilter ausgebildet ist.

10. Filtermodul nach Anspruch 8, **dadurch gekennzeichnet, dass** das Filtergehäuse (20) einen runden oder ovalen Querschnitt aufweist.

## Claims

1. Flexible filter element (10), in particular a filter element for filtering air for the interior area of a motor vehicle, with a flexible filter insert (12) acting as filter medium, with at least one, in its transverse direction flexible lateral strip (14) which is arranged sealingly and at least partially in a frame design around lateral edges of the filter insert (12), the lateral strip (14) featuring an adhesive layer (18) at the side of the filter insert (12) for a sealing connection with the filter insert (12), **characterized in that** the adhesive layer consists of an adhesive featuring
a) a Shore hardness A < 65 at 23°C and having
b) an elongation at break of > 300%.

2. Filter element according to claim 1, **characterized in that** the elongation at break amounts to > 400%.

3. Filter element according to claim 1 or 2, **characterized in that** the material of the at least one lateral strip is selected from synthetic non-woven fabric, elastomer, flexible plastic material, interwoven fleece and the like.

4. Filter element according to one of the claims 1 to 3, **characterized in that** the thickness of the lateral strip amounts to approx. 0.5 to 15 mm, preferably to approx. 2 to 6 mm.

5. Filter element according to one of the above claims, **characterized in that** the width of the lateral strip amounts to approx. 5 to 80 mm, preferably to approx. 10 to 60 mm.

6. Filter element according to one of the above claims, **characterized in that** the filter insert (12) has a concertina-type, fanfold or wavelike design in its longitudinal direction.

7. Filter element according to one of the above claims, **characterized in that**, at least at pleated lateral edges of the filter insert (12), the lateral strip (14) is attached by means of the adhesive layer to the filter insert (12).

8. Filter module (20), in particular particle and/or odor filters, with a filter housing (22) with at least one filter element (10) according to at least one of the claims 1 to 7 which is sealingly inserted into the filter housing (22).

9. Filter module according to claim 8, **characterized in that** the filter element (10) is designed as odor and/or particle filter.

10. Filter module according to claim 8, **characterized in that** the filter housing (20) features a round or oval cross-section.

## Revendications

1. Elément filtrant flexible (10), notamment élément filtrant destiné au filtrage d'air pour l'intérieur d'un véhicule automobile, avec un insert de filtre (12) flexible faisant office de milieu filtrant, avec au moins une bande latérale (14) flexible en sens transversal, laquelle est disposée à des fins d'étanchéité et au moins en partie en forme de cadre autour des bords latéraux de l'insert de filtre (12), la bande latérale (14) présentant une couche de colle (18) du côté de l'insert de filtre afin de former un assemblage étanche avec l'insert de filtre (12), **caractérisé en ce que** la couche de colle est composée d'une colle qui
a) présente une dureté shore A < 65 à 23°C et
b) fait preuve d'une élongation à la rupture > 300%.

2. Elément filtrant selon la revendication 1, **caractérisé en ce que** l'élongation à la rupture est > 400 %.

3. Elément filtrant selon la revendication 1 ou 2, **caractérisé en ce que** le matériau de la bande latérale au nombre d'au moins une est un non-tissé synthétique, un élastomère, une matière plastique flexible, des non-tissés entrelacés ou un autre matériau similaire.

4. Elément filtrant selon l'une des revendications 1 à 2, **caractérisé en ce que** l'épaisseur de la bande latérale est d'env. 0,5 à 15 mm, de préférence d'env. 2 à 6 mm.

5. Elément filtrant selon l'une des revendications précédentes, **caractérisé en ce que** la largeur de la bande latérale est d'env. 5 à 80 mm, de préférence env. 10 à 60 mm.

6. Elément filtrant selon l'une des revendications précédentes, **caractérisé en ce que** l'insert de filtre (12) est plié en sens longitudinal en forme d'accordéon ou de zigzag ou a une forme ondulée.

7. Elément filtrant selon l'une des revendications précédentes, **caractérisé en ce que**, au moins au niveau des bords latéraux pliés de l'insert de filtre (12), la bande latérale (14) est fixée à l'insert de filtre (12) par la couche de colle.

8. Module de filtre (20), notamment filtre à particules et/ou filtre à odeurs, avec un boîtier de filtre (22) avec au moins un élément filtrant (10) selon au moins l'une des revendications 1 à 7, lequel est inséré dans le boîtier de filtre (22) à des fins d'étanchéité.

9. Module de filtre selon la revendication 8, **caractérisé en ce que** l'élément filtrant (10) est conçu comme filtre à odeurs et/ou filtre à particules.

10. Module de filtre selon la revendication 8, **caractérisé en ce que** le boîtier de filtre (20) présente une section ronde ou ovale.
